# EUROPEAN PATENT APPLICATION

(11) **EP 2 361 711 A1**
(43) Date of publication of application: **31.08.2011**
(21) Application number: 11154786.5
(22) Date of filing: 17.02.2011
(51) Int. Cl.: B23D 57/00, B28D 1/08

(54) **Apparatus for controlling and adjusting the tension of cutting wires in machine tools for stone materials.**

(30) Priority: 19.02.2010 IT MI20100264
(71) Applicant: Barsanti Macchine S.p.A., 54100 Massa (IT)
(72) Inventor: Barsanti, Fosco, 54100, Massa (IT)
(74) Representative: Raimondi, Margherita

(57) **Abstract**

Apparatus for controlling and adjusting the tension of a wire (1) of machine tools (10) for cutting stone materials (2), comprising at least two columns (11) each of which has mounted thereon a sliding member (12) displaceable in the vertical direction (Z-Z) from a top start-of-cut position to a bottom end-of-cut position and vice versa, at least one driving roller (13) and at least one transmission roller (14) being respectively mounted on each sliding member (12), the cutting wires (1) being endlessly wound around said rollers (13,14), and at least one pulley (131) for tensioning the cutting wire (1) in the longitudinal direction (X-X), which apparatus comprises a flange (100) which has a first axis of rotation on which said pulley for tensioning the wire (1) is mounted; a second axis of rotation (111) about which the flange is able to rotate from a "fully in" position of the pulley (131) into a "fully out" position of the pulley and vice versa; a third axis of rotation (121a) on which the rod (121) of a thrust cylinder (122) is hinged, said cylinder being in turn hinged on a fixed point (122a) of a support (125) fastened to the sliding member (12), said cylinder (122) being associated with a one-way discharge valve (123) able to keep the pressure of the cylinder constant upon variation in the angular position of the flange (100) during the downward cutting stroke.

## Description

The present invention relates to an apparatus for controlling and adjusting the tension of a cutting wire in machines for cutting stone materials.

It is known in the technical sector of machines for processing stone materials to use so-called multiwire machine tools for cutting blocks into slabs; said machines are generally formed by a column-type support structure having, mounted thereon, two or more rollers, one of which is a driving roller and is provided with a plurality of grooves formed on its annular surface and the others of which are idle rollers, in turn being provided with multiple grooves, said driving roller and idle roller having, mounted thereon in a closed loop, the cutting tools consisting of a diamond-coated flexible wire, i.e. wires with a steel core onto which sintered diamond beads (metal segments) are mounted.

It is also known that the driving and idle transmission rollers are attached to plates sliding on columns of the fixed structure, relative to which they are displaceable vertically so as to allow the so-called downward cutting stroke and subsequent return movement.

When the machine is set up for the cuts required by the specific machining operation, the single wires which must work effectively are tensioned with a predefined force by means of an associated auxiliary pulley attached to the sliding flange and movable with respect to the latter perpendicularly relative to the wire and parallel to the plane comprising the rotating wire.

During the downward cutting stroke it happens, however, that the wire tends to cut more the opposite ends of the block than the central part thereof, therefore tending to become curved in the centre and forming an upwards convexity which is referred to in the sector as "bowing".

As a result of said bowing effect, the tension of the wire tends to increase, causing a reduction in the cutting quality and subsequent breakage of the wire when the tension exceeds the strength and tensile force of the wire itself.

Such behaviour of the wire has resulted in attempts to find a solution to the problem based on the use of mechanisms for controlling the thrust of the tensioning pulley on the wire itself, said mechanisms, however, being very complicated, bulky and heavy, and being difficult and awkward to manoeuvre both singly and when mounted in sets on the machine, these mechanisms having to be applied to each pulley for each wire.

Examples of the prior art in relation to the preamble of Claim 1 are described in EP 1,598,162 and WO 2007/0367884 which illustrate devices for adjusting the tension of the cutting wire in static conditions, but without the possibility of varying automatically the thrust of the tensioning pulley when there is a variation in the tension of wire during the downward cutting stroke.

The technical problem posed is therefore that of providing an apparatus for controlling and adjusting the tension of cutting wires in machines for cutting stone materials, which apparatus is able to keep as constant as possible the tensioning force of the cutting wire, dynamically during the downward cutting stroke, said apparatus being reliable also in the presence of dusts ands liquids which are typical of the working conditions for cutting stone materials.

In connection with this problem it is also required that the apparatus should be easy and inexpensive to produce and assemble and be able to be installed easily also on already existing machines without the need for special adaptation.

These results are achieved according to the present invention by an apparatus for controlling the force for tensioning cutting wires in machines for cutting stone materials according to the characteristic features of Claim 1.

Further details may be obtained from the following description of a non-limiting example of embodiment of the subject of the present invention provided with reference to the accompanying drawings in which:
- Figure 1:: shows a perspective view of a cutting machine with apparatus according to the present invention;
- Figure 2:: shows a schematic front view of the apparatus according to the invention;
- Figure 3:: a schematic side view of the apparatus in the position with the wire not activated;
- Figure 4:: shows a schematic side view of the apparatus in the position where the wire is activated and under maximum tension;
- Figure 5:: shows a schematic side view of the apparatus in the position with minimum tensioning of the wire; and
- Figure 6:: shows a schematic side view of the apparatus in the "fully out" position corresponding to a condition when the wire is broken.

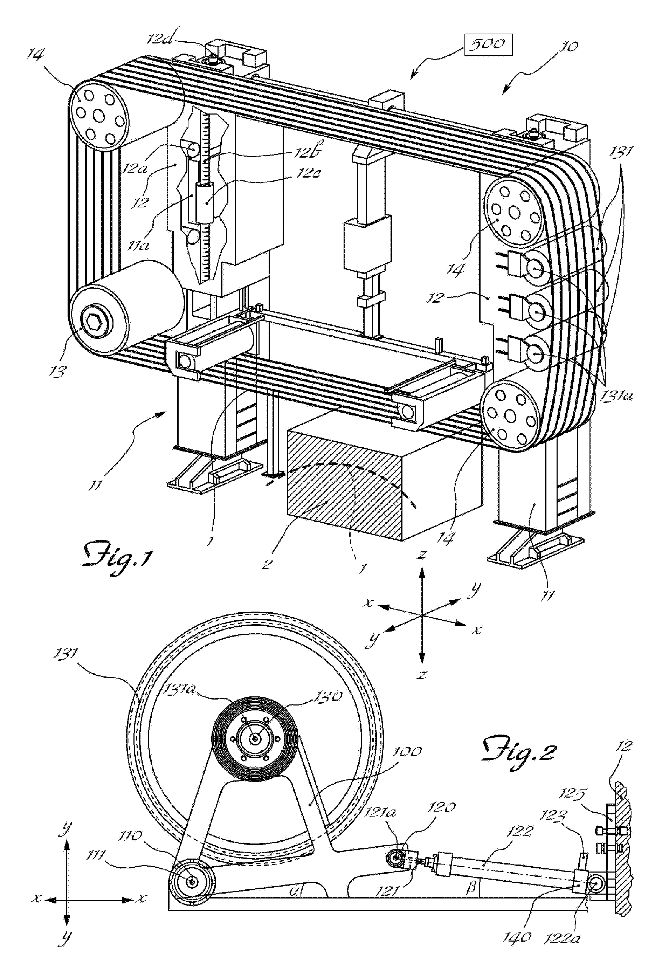

As shown in Fig. 1 and assuming solely for the sake of convenience of the description and without any limitation of meaning a set of three reference axes in a longitudinal direction X-X, transverse direction Y-Y and vertical direction Z-Z, respectively, a machine tool 10 for cutting stone materials comprises at least columns 11 each having, mounted thereon, a sliding member 12 displaceable in the vertical direction Z-Z from a top start-of-cut position into a bottom end-of-cut (downward stroke) position and vice versa.

The sliding members 12 are guided by respective rollers 12a co-operating with slides 11a on each column 11 and moved by a conventional worm screw 12b engaged with a sleeve 12c and actuated by an actuator 12d.

The sliding members 12 also have, mounted thereon, a driving roller 13 and idle rollers 14 for transmission of the cutting wires 1, as well as the apparatus for controlling and adjusting the tension of the wires 1 during cutting of the block 2 arranged between the two columns.

Each control and adjustment apparatus comprises: a flange 100 which has:
- a first hole 110 suitable for mating with a pin 111 extending in the transverse direction Y-Y and fixed to the structure so as to form the axis of rotation of the flange itself;
- a second hole 120 suitable for mating with a pin 121a of the rod 121 of a cylinder 122, the other end 122a of which is hinged on a support 125 fastened to the sliding member 12; said cylinder 122 is associated with a breather valve 123 able to maintain a constant thrusting pressure acting on the stem 121a during variation in the stroke thereof in either direction;
- a third hole 130 which seats the pin 131a of the tensioning pulley 131.

As shown, the three holes 110,120,130 are preferably arranged at the vertices of a triangle with its base arranged at a thrust angle α relative to the longitudinal axis X-X; said angle α being between 5° and 60° and preferably between 7° and 50°.

Correspondingly, the cylinder 122 will also be arranged at a thrust angle β of between 5° and 40° and preferably between 7° and 35°.

According to the invention it is also envisaged that said thrust angle β of the cylinder 122 is detected by a measuring instrument 140 associated with the cylinder 122 and able to emit a signal corresponding to the amplitude of said angle β and to send the signal to the machine programming and control means 500.

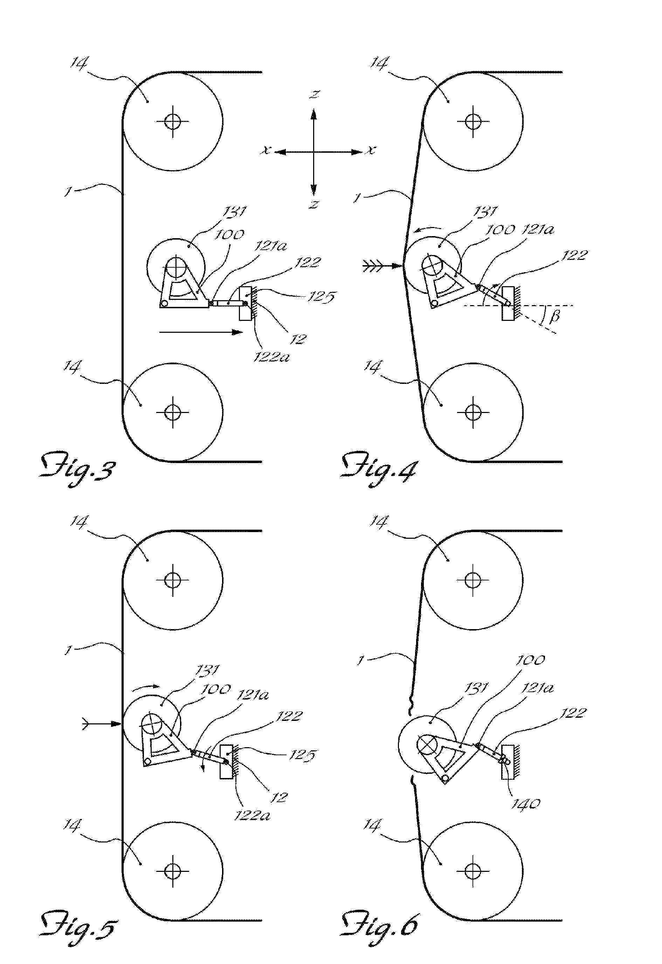

With this structure and with reference to Figs. 3-6 the operating principle of the apparatus is as follows:
- the apparatus is arranged in the "fully in" position (Fig. 3), i.e. with the rod 121a retracted completely inside the cylinder 122 so that the tensioning pulley 131 is separated from the wire 1 in the longitudinal direction X-X; with this relative position of pulley and wire the latter is not activated for the cutting operation;
- the cutting wire 1 is wound endlessly around the driving roller 13 and the idle rollers 14;
- the wire 1 is pre-tensioned, by adjusting one of the pulleys 14 which is movable in the vertical direction Z-Z until the predefined cutting tension is obtained;
- the cylinder 122 is loaded with a constant pressure such as to cause rotation of the flange 100 until the pulley 131 comes into contact with the wire 1 and, pushing it in the longitudinal direction X-X, sets it to the activation and predefined tension condition for the cutting operation depending on the parameters of the downward stroke; in this condition the reaction of the wire 1 counterbalances the thrust of the cylinder 122, and the tensioning pulley 131 is stable in the thrust position;
- the downward cutting stroke is started such that the wire 1 assumes the so-called bowed condition (shown in broken lines in Fig. 1), resulting in an increase in its tension and therefore a greater thrust pushing the pulley 131 inwards; the constant pressure of the cylinder 122 is therefore overcome by the longitudinal thrusting force acting in the opposite direction and exerted by the wire 1 and the flange 10 rotates in a clockwise direction, in turn causing rotation in the anti-clockwise direction of the cylinder 122; consequently, the thrust angles α and β vary until the wire 1 and the pulley 131 reach a new equilibrium condition of the thrusting forces, in which position the wire has regained its original tension; in addition, during the self-adjusting sequence, the potentiometer 140 which has detected the variation in the thrust angle β of the cylinder has sent corresponding signals to the control unit 500 of the machine in order to slow down the speed of the downward stroke and prevent breakages of the wire with consequent downtime of the machine.

According to a preferred embodiment of the apparatus, during the cutting operation, the rotation of the flange 100 occurs within an angular working range defined by two minimum and maximum values, respectively, such that the thrust angle α corresponding to rotation of the flange 100 results in a direction of thrust of the pulley on the wire which is substantially rectilinear.

Said value α = MAX corresponds to the tension of the wire 1 programmed for cutting and the value α = MIN corresponds to the maximum value of the bowing effect permitted depending on the characteristics of the wire and the cutting conditions.

Preferably, the minimum/maximum angular working range is between 15° and 50°, and preferably between 20° and 40°.

When the pulley moves beyond the maximum value it is assumed that the pulley is in a "fully out" position (Fig. 6) which is assumed to correspond to a condition where the wire 1 is broken; consequently the measurement potentiometer 140 sends an immediate stop signal to the control unit 500 of the machine, which stops the downwards stroke.

It is therefore clear how with the apparatus according to the invention it is possible to achieve automatic and dynamic control and adjustment of the tension of a cutting wire of machines for cutting stone materials, being safe and reliable and at the same time simple and inexpensive to implement and install on the machine.

Although described with reference to a single cutting wire and a machine with two columns having projecting roller and pulleys, the apparatus may be likewise applicable also to multiple machines with four columns having cutting-wire driving rollers/idle transmission rollers supported at both ends of the axis of rotation; in this case it is also envisaged providing a one-way valve for controlling the pressure of all the mounted cylinders.

Although described in connection with certain constructional forms and certain preferred examples of embodiment of the invention, it is understood that the scope of protection of the present patent is defined solely by the following claims.

## Claims

1. Apparatus for controlling and adjusting the tension of a wire (1) of machine tools (10) for cutting stone materials (2), comprising at least two columns (11) each of which has mounted thereon a sliding member (12) displaceable in the vertical direction (Z-Z) from a top start-of-cut position to a bottom end-of-cut position and vice versa, at least one driving roller (13) or at least one transmission roller (14) being respectively mounted on each sliding member (12), the cutting wires (1) being endlessly wound around said rollers (13,14), and at least one pulley (131) for tensioning the cutting wire (1) in the longitudinal direction (X-X), comprising a flange (100) which has:
- a first axis of rotation (131a) on which said pulley (131) for tensioning the wire (1) is mounted;
- a second axis of rotation (111) about which the flange is able to rotate from a "fully in" position of the pulley (131) into a "fully out" position of the pulley and vice versa;
- a third axis of rotation (121a) on which the rod (121) of a thrust cylinder (122) is hinged, said cylinder being in turn hinged on a fixed point (122a) of a support (125) fastened to the sliding member (12), **characterized in that** said cylinder (122) is associated with a one-way discharge valve (123) able to keep the pressure of the cylinder constant upon variation in the angular position of the flange (100) during the downward cutting stroke.

2. Apparatus according to Claim 1, **characterized in that** said second axis of rotation (111) of the flange (100) is formed by a pin (111) which is fixed to the structure and engaged with a corresponding hole (110) in the flange itself.

3. Apparatus according to Claim 1, **characterized in that** said cylinder (122) is arranged at a thrust angle (β) with respect to the longitudinal direction (X-X).

4. Apparatus according to Claim 3, **characterized in that** opening of the breather valve of the cylinder (122) is dependent on the said thrust angle (β) of the cylinder itself.

5. Apparatus according to Claim 1, **characterized in that** it comprises a device able to detect the variations in the thrust angle (β) of the cylinder (122) and emit corresponding signals sent to the input of the programming and control means (500) of the machine.

6. Apparatus according to Claim **3**, **characterized in that** said thrust angle (β) is between 5° and 40° and preferably between 7° and 35°.

7. Apparatus according to Claim 1, **characterized in that** said flange (100) is arranged at a thrust angle (α) with respect to the longitudinal direction (X-X).

8. Apparatus according to Claim 7, **characterized in that** said thrust angle (α) is between 5° and 60° and preferably between 7° and 50°.

9. Apparatus according to Claim 7, **characterized in that** said thrust angle (α) envisages two positions for minimum and maximum thrust on the wire (1), situated between the two "fully in" and "fully out" end positions of the pulley.

10. Apparatus according to Claim 9, **characterized in that** in the angular range defined by the two intermediate minimum and maximum positions the pulley (131) performs a substantially rectilinear translatory movement.
